# EUROPÄISCHE PATENTSCHRIFT

(11) **EP 1 011 904 B1**
(45) Veröffentlichungstag und Bekanntmachung des Hinweises auf die Patenterteilung: **14.11.2001**
(21) Anmeldenummer: 98948862.2
(22) Anmeldetag: 25.08.1998
(51) Int. Cl.: B23C 3/06, B23C 5/20

(54) **SCHEIBENFRÄSER UND DAFÜR GEEIGNETE WENDEPLATTE**
SIDE MILLING CUTTER AND SUITABLE INDEXABLE INSERT
FRAISE A DISQUE ET PLAQUE REVERSIBLE APPROPRIEE

(30) Priorität: 09.09.1997 DE 19739366
(43) Veröffentlichungstag der Anmeldung: 28.06.2000
(73) Patentinhaber: KENNAMETAL INC., Latrobe, PA 15650-0231 (US)
(72) Erfinder: MÜLLER, Gebhard, D-90766 Fürth (DE); JÄGER, Horst, D-90451 Nürnberg (DE)
(74) Vertreter: Tergau & Pohl Patentanwälte
(86) Internationale Anmeldenummer: EP9805374
(87) Internationale Veröffentlichungsnummer: WO9912686

(56) Entgegenhaltungen:
- EP-A- 0 156 780
- WO-A-96/39269

## Beschreibung

Die Erfindung betrifft einen Scheibenfräser gemäß dem Oberbegriff des Anpruches 1. Sie betrifft weiter eine Wendeschneidplatte für einen Scheibenfräser.

Mit einem derartigen, z.B. aus der WO 96/39269 bekannten Scheibenfräser werden Kurbelwellenzapfen bei im Gleichlauf um ihre Achse rotierend angetriebenem Werkstück gemeinsam mit beiden zugeordneten Ölbundwangen und zwischen diesen vorgesehen, als Ölnuten dienenden Freistichen gefräst. Dieses Fräsen kann mit einer einzigen Zustellung des Scheibenfräsers, d.h. in einem Arbeitsgang erfolgen. Dazu ist der Scheibenfräser auf seinem Umfang in Umfangsrichtung auf der linken und auf der rechten Seite mit plattenförmigen Schneideinsätzen bestückt.

Kurbelwellenzapfen weisen meist einen nur begrenzten Durchmessser auf. Dementsprechend stark ist die Krümmung der vom Fräser zu einem Zylindermantel zu formenden Oberfläche der Kurbelwellenzapfen. Das hat zur Folge, daß bei herkömmlichen Scheibenfräsern üblicherweise für diesen Einsatzzweck nur jeweils eine Fräserschneide im Eingriff ist. Das geschieht abwechselnd auf der linken und auf der rechten Seite des Umfanges des Scheibenfräsers. Das bedingt einen unruhigen Lauf und daraus resultiert die Gefahr einer Beeinträchtigung der Oberflächengüte.

Der Erfindung liegt die Aufgabe zugrunde, die Laufruhe des Scheibenfräsers zu verbessern und damit das Fräsergebnis zu optimieren. Diese Aufgabe wird erfindungsgemäß gelöst durch die Merkmale des Anspruchs 1. Dazu sind die Schneideinsätze mit ihren die Spanflächen enthaltenden Deckflächen im wesentlichen radial zur Fräserachse ausgerichtet. Außerdem sind die Schneideinsätze mit einer derart engen Teilung auf dem Umfang des Fräsers angeordnet, daß die Eingriffsbogenlänge zwischen Schnitteintritt und Schnittaustritt eines Schneideinsatzes am Kurbelzapfen größer ist als die halbe Teilung der Anordnung der Schneideinsätze am Umfang des Fräsers. Als ganze Teilung wird dabei entweder auf der linken oder auf der rechten Seite des Fräserumfangs der Abstand zwischen zwei in Umfangsrichtung des Fräsers aufeinanderfolgenden Schneideinsätzen verstanden. Dadurch wird folglich eine so enge Teilung ermöglicht, daß die Eingriffsbogenlänge des Fräsers größer ist als die halbe Fräserteilung auf dessen rechter oder auf dessen linker Seite. Mit Eingriffsbogenlänge wird der Bogen bezeichnet, den jede Fräserschneide zwischen Schnitteintritt und Schnittaustritt am Kurbelwellenzapfen durchmißt. Da die am Fräserumfang links und rechts angeordneten Schneidplatten jeweils um eine halbe Teilung gegeneinander versetzt sind mit der Folge, daß die linken Schneidplatten mittig auf Lücke gegenüber den rechten Schneidplatten (und umgekehrt) stehen, entspricht die halbe Teilung dem Umfangsbogen des Fräsers zwischen einer Schneide links und einer benachbarten Schneide rechts.

Somit ist immer mehr als nur eine Schneide im Eingriff. Damit findet eine schwellende Schnittkraftbelastung zwischen einem unteren und einem oberen Wert statt. Es liegen keine wechselnden Lasten zwischen null und maximal vor. Das ist auch maschinendynamisch von Vorteil und begünstigt eine große Standzeit.

Die Erfindung nutzt den geringen Verbrauch an Umfangslänge des Scheibenfräsers durch jeden einzelnen Schneideinsatz aus. Dieser geringe Verbrauch an Umfangslänge wird durch die ausschließliche Verwendung von plattenförmigen Schneideinsätzen ermöglicht, die mit ihren Deckflächen eine Spanfläche bilden und dadurch - bezogen auf ihre plattenartige Gestalt - im wesentlichen radial am Fräserumfang ausgerichtet sind. Dabei ist der Scheibenfräser sowohl auf der linken als auch auf der rechten Seite seines Umfanges mit einer identisch gleichgestalteten Schneidplatte bestückt. Diese ist darüber hinaus - gleichgültig ob auf der linken oder auf der rechten Seite des Fräserumfanges eingesetzt - als Wendeschneidplatten ausgebildet, welche mehr als eine in Schneidstellung bringbare Schneide zur Verfügung stellt.

Die Kostenvorteile solcher Wendeplatten sind generell bekannt. Wenn hier von "Wendeplatte" gesprochen ist, so müßte eigentlich der Begriff "Doppelwendeplatte" benutzt werden, weil die Wendung eine unterschiedliche Einsetzbarkeit derselben Platte sowohl auf der linken als auch auf der rechten Fräserseite ermöglicht und die andere Wendung auf der linken oder auf der rechten Seite eine weitere Schneide zur Verfügung stellt. Wenn hier von "Schneide" die Rede ist, so handelt es sich dabei um eine komplett abbildende, nämlich um eine zusammengefaßte oder anderweitig kombinierte Durchmesser- und Einstichschneide, die entweder auf der linken oder auf der rechten Seite des Kurbelzapfens mit einer einzigen Zustellung die komplette Endform herstellt.

Die Erfindung bezieht sich ausgehend vom Stand der Technik gemäß EP-A 0 156 780 weiterhin auf die nähere Ausgestaltung der vorstehend allgemein beschriebenen Wendeschneidplatten für den genannten Einsatzzweck. Deren grundsätzliche Formgestaltung ist in Anspruch 3 niedergelegt. Die Wendeschneidplatte zeichnet sich durch eine Reihe von Gestaltungsvariationen aus, die anhand von in den Figuren dargestellten Ausführungsbeispielen näher beschrieben werden. Es zeigen:
- Fig. 1: eine prinzipielle Seitendarstellung des im Gleichlauf erfolgenden Zapfenfräsvorganges anhand eines am Zapfenumfang in Eingriffstellung befindlichen Umfangssegmentes des Fräsers.
- Fig. 2: einen Querschnitt entsprechend der Linie II-II in Fig. 1, wobei die im Schnitt stehende, komplett abbildende Schneide der Schneidplatte gestrichelt dargestellt ist, obwohl sie eine durchgehende Schnittkante bildet.
- Fig. 3: eine Draufsicht auf das Umfangssegment des Scheibenfräsers gemäß Fig. 1.
- Fig. 4: eine Ausführungsform des Wendeschneidkörpers für den Scheibenfräser in Draufsicht und in drei Teilschnitten A-A, B-B und C-C. In der Draufsicht sind wiederum die geschlossen komplett abbildenden Schneiden gestrichelt dargestellt, obwohl sie eine durchgehende, sichtbare Kante sind.
- Fig. 5: in Draufsicht, in Seitenansicht und in zwei Teilschnitten A-A und B-B eine modifizierte Ausführungsform der Wendeschneidplatte. Auch hier gilt für die gestrichelt dargestellten Schneidkanten das vorstehend zu Fig. 2 und Fig. 4 Gesagte.
- Fig. 6: in teilweiser Schnittdarstellung den vom Scheibenfräser zu bearbeitenden Kurbelzapfen in seinem Ausgangszustand, wobei der durch den Fräsvorgang abzutragende Oberflächenbereich des Kurbelzapfens durch punktierte Ausgestaltung optisch hervorgehoben ist.
- Fig. 7: einen Teilschnitt durch den Kurbelzapfen gemäß Fig. 6 mit schematisch in ihrer Eingriffsstellung dargestellten Wendeschneidplatten des Typs gemäß Fig 5.
- Fig. 8: eine Draufsicht auf ein Umfangssegment des Scheibenfräsers, der mit Wendeschneidplatten des Typs gemäß Fig. 5 bestückt ist und zum Zwecke einer besonders engen Teilung mit einer gegenüber den Fig. 1 und Fig. 2 modifizierten Schneidplatten-Klemmeinrichtung versehen ist.
- Fig. 9: in Draufsicht und in drei Teilschnitten A-A, B-B und C-C mit Teilvergrößerungen Z,Y und X eine weitere modifizierte Ausführungsform eines Wendeschneidkörpers grundsätzlich der in Fig. 4 dargestellten Art. Auch hier gilt für die gestrichelt dargestellten Schneidkanten das vorstehend zu Fig. 2 und Fig. 4 Gesagte.
- Fig. 10: eine weitere modifizierte Ausführungsform einer Wendeschneidplatte der in Fig 4 dargestellten Grundkonzeption sowie drei Teilschnitte A-A, B-B und C-C davon sowie mit davon vergrößerten Ausschnitten Z und X. Auch hier gilt für die gestrichelt dargestellten Schneidkanten das vorstehend zu Fig. 2 und Fig. 4 Gesagte.
- Fig. 11: in Draufsicht und in Seitenansicht sowie in zwei Teilschnitten eine weitere Modifizierung der Wendeschneidplatte der Grundkonzeption nach Fig. 4. Auch hier gilt für die gestrichelt dargestellten Schneidkanten das vorstehend zu Fig. 2 und Fig. 4 Gesagte.

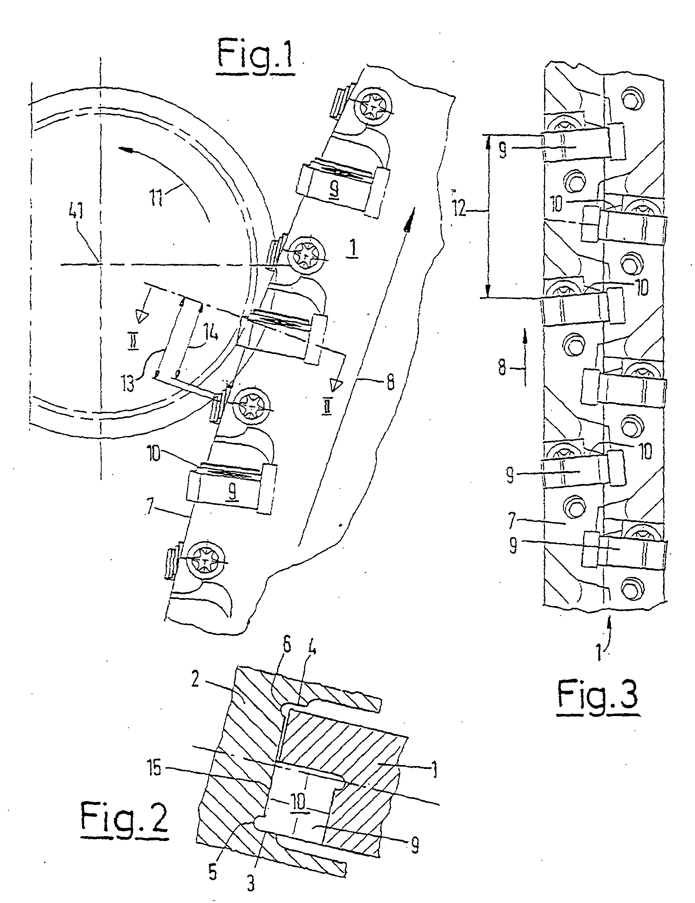

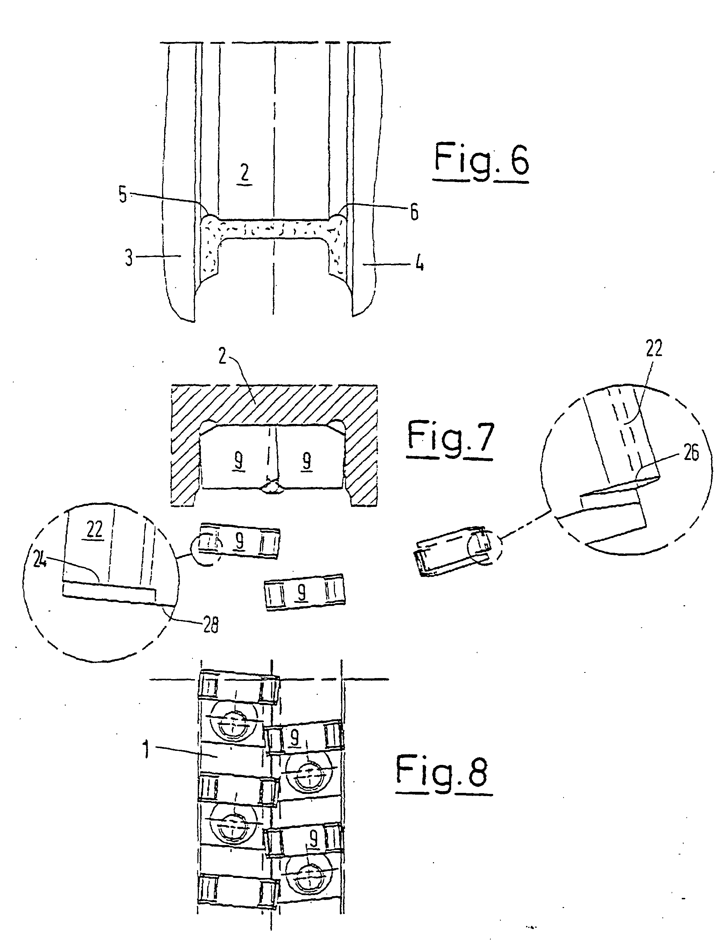

Der nur in Form eines Umfangssegments dargestellte Scheibenfräser 1 dient zum in einer einzigen Zustellung möglichen Fräsen eines Kurbelzapfens 2 gemeinsam mit beiden ihm zugeordneten Ölbundwangen 3,4 und mit den als Ölnuten dienenden Freistichen 5,6 dazwischen (Fig. 2,6) als Werkstück.

Der Scheibenfräser 1 ist auf seinem Umfang 7 in Umfangsrichtung (= Drehrichtung) 8 abwechselnd auf seiner linken und auf seiner rechten Seite mit plattenförmigen Schneideinsätzen 9 bestückt, die mit ihren die Spanflächen enthaltenden Deckflächen 10 im wesentlichen radial zur Fräserachse (nicht dargestellt) ausgerichtet sind. Die Bearbeitung des Kurbelzapfens 2 erfolgt vorzugsweise im Gleichlauf. Die Drehrichtung 11 des Werkstückes ist also zur Drehrichtung 8 des Scheibenfräsers gleichgerichtet.

Die Schneideinsätze 9 sind mit einer Teilung 12 (Fig. 3) gleichmäßig auf dem Fräserumfang 7 in Umfangsrichtung 8 auf der linken und auf der rechten Fräserseite angeordnet. Die Anordnung der Schneideinsätze 9 auf der linken Seite ist spiegelbildlich und um eine halbe Teilung 12 versetzt gegenüber der Anordnung auf der rechten Seite (Fig. 3). Die Teilung 12 ist so eng, daß die Eintrittsbogenlänge 13 zwischen Schnitteintritt und Schnittaustritt des Schneideinsatzes 9 am Werkstück 2 größer ist als die halbe Teilung 14 der Anordnung der Schneideinsätze 9 am Umfang des Fräsers 1.

Die Schneideinsätze 9 sind Wendeschneidplatten mit mindestens zwei auf derselben Fräserseite nacheinander in Schneidstellung bringbaren Schneiden 15,16. Zur Kenntlichmachung ihrer Eigenschaft als geschlossene, komplett ausbildende Schneide sind sie in den Figuren gestrichelt hervorgehoben, obwohl sie selbstverständlich durchgehende, sichtbare Schneidkanten bilden.

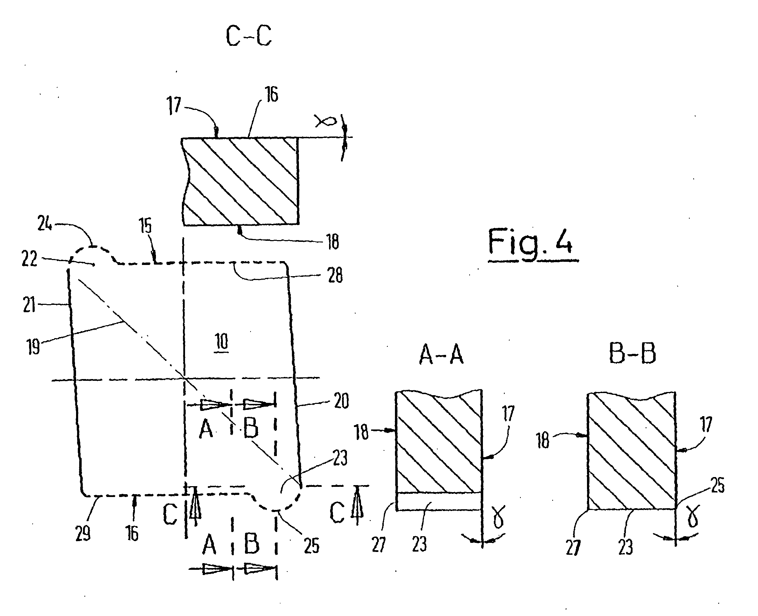

Jeder Schneideinsatz 9 ist mit einer derartigen Umfangskontur seiner die Spanflächen enthaltenden Deckflächen 10 versehen, daß ein Schneideinsatz jeweils eine Hälfte des Kurbelzapfens 2 mit deren benachbarter Ölbundwange 3 bzw. 4 und dem Freistich 5 bzw. 6 dazwischen formt. Jeder Schneideinsatz 9 ist im Bereich seiner beiden Deckflächen, von denen in den Fig. 2 und 4ff jeweils nur die obere, sichtbare Deckfläche 10 dargestellt ist, mit zwei geschlossen komplett abbildenden Schneiden 15, 16 ausgestattet. Jede Schneidplatte 9 trägt also insgesamt vier Schneiden 15,16. Zwei dieser Schneiden sind dabei für den Einsatz auf der linken und zwei für den Einsatz auf der rechten Seite des Umfanges 7 des Fräsers 1 geeignet bzw. bestimmt.

Die Grundform der als Schneideinsatz 9 verwendeten Wendeschneidplatte ist Gegenstand von Fig. 4. Diese Wendeschneidplatte ist gekennzeichnet durch die Form etwa eines Quaders mit etwa rhombusförmigen oder rhomboiden, die Spanflächen 17,18 enthaltenden Deckflächen, von denen in Draufsicht hinsichtlich die Deckfläche 10 mit einer Positionsziffer versehen ist. Die in Richtung der längeren Rhombusdiagonalen 19 (Fig. 4) stehenden Plattenecken weisen jeweils in Verlängerung der beiden gegenüberliegenden, jeweils eine Schneidkante 20,21 bildenden Deckflächenseiten einen nasenartigen Trägervorsprung 22 bzw. 23 mit einer Einstichschneide 24,25 zum Formen eines Freistiches 5,6 am Kurbelzapfen 2 auf. Die Trägervorsprünge 22,23 sind auch auf der der dargestellten Deckfläche 10 gegenüberliegenden Seite, nämlich im Bereich der Spanfläche 18 als Träger einer dortigen Einstichschneide 26 bzw. 27 wirksam. Jede Schneide 15,16 einer der beiden Deckflächen 10 des Schneideinsatzes 9 bildet also - bei der Ausführungsform gemäß Fig. 4 ineinander übergehend - eine Einstichschneide 24 bzw. 25 und daran anschließend eine Durchmesserschneide 28 bzw. 29 und analog auf der Unterseite der Wendeplatte jeweils eine Einstichsc hneide 26 bzw. 27 und eine Durchmesserschneide.

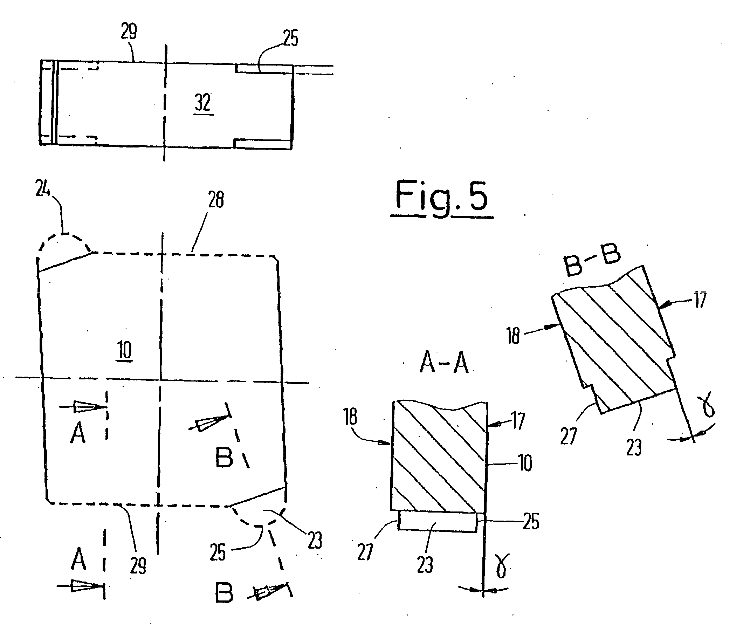

Die Freiflächen 32 (Fig. 5) der Schneideinsätze 9 bilden einen rechten Winkel mit den Spanflächen 16,18. Bei der Ausführungsform nach Fig. 4 geht jede Durchmesserschneide 28,29 stufenlos in die zugeordnete Einstichschneide 24 bzw. 25 über. Beide Schneiden liegen in derselben Deckfläche 10 bzw. in derselben Spanfläche 17,18. Der Spanwinkel γ beträgt 0°. im Schnitt stehend ist er negativ.

Im Gegensatz zur Schneidplatte 9 gemäß Fig. 4 liegen bei der Schneidplatte 9 gemäß Fig. 5 die Einstichschneiden 24,25 bzw. 26,27 abgestuft jeweils unterhalb der zugehörigen Durchmesserschneiden 28,29. Dadurch ist die jeweilige, komplett abbildende Gesamtschneide 15,16 von jeweils einer Durchmesserschneide 28,29 und von einer ihrgegenüber entgegen der Drehrichung 8 zurückgesetzten eine Einstichschneide 24,25 bzw. 26,27 gebildet. Die Gesamtschneide 15 bzw. 16 ist geteilt. Dadurch erfolgt eine Aufteilung der Schnittkraft in zwei kleinere Teile, welche ihre Maxima nicht gleichzeitig erreichen. Dadurch werden niedrigere Schnittkraftspiele erreicht. Es ist dies eine effektive Wirkgeometrie mit weiterhin negativem Spanwinkel γ von 0°.

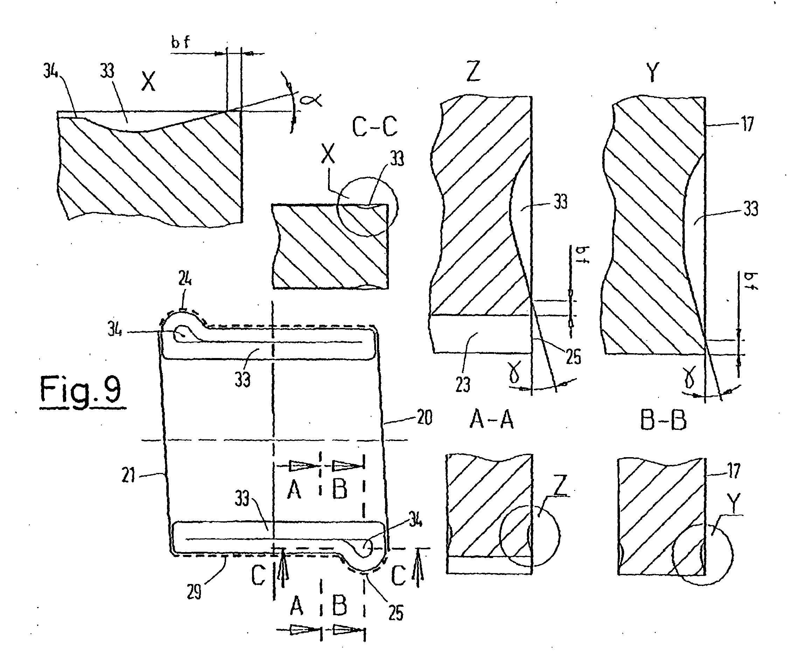

Die Schneidplatte gemäß Fig. 9 stellt eine Modifizierung der Schneidplatte gemäß Fig. 4 dahingehend dar, daß eine jede Schneide 15,16 bestehend aus ineinander übergehend einer Durchmesserschneide 28,29 und einer Einstichschneide 24,25 bzw. 26,27 zur Bildung von positiven Schneiden mit einer Spanformstufe 33 versehen ist. Die Spanformstufe 33 weist eine muldenartige Querschnittsform auf. Dadurch ist der Spanwinkel γ positiv. Die muldenartige Querschnittsform der Spanformstufe geht aus den Schnittdarstellungen A-A, B-B und C-C hervor, deren Bereiche Z,Y und X noch vergrößert dargestellt sind. Daraus ist ersichtlich, daß im Bereich der Einstichschneiden 24,25 in Spanablaufrichtung hinter der Spanformstufe 33 eine gegenüber der Spanfläche 17 bzw. 18 vertiefte, inselartige Plateaufläche 34 gebildet ist. Auch der Spanwinkel γ, welcher der Schneidkante 20 bzw. 21 zugeordnet ist, ist positiv. Der Schneideinsatz mit einer Spanformstufe entlang der gesamten Schneide gemäß Fig. 5 eignet sich besonders für langspanende Werkstoffe sowie auch zur Schnitt- und Passivkraftreduzierung. Es liegt eine effektive Wirkgeometrie mit positiven Spanwinkeln an den Durchmesserschneiden und an den Einstichschneiden vor.

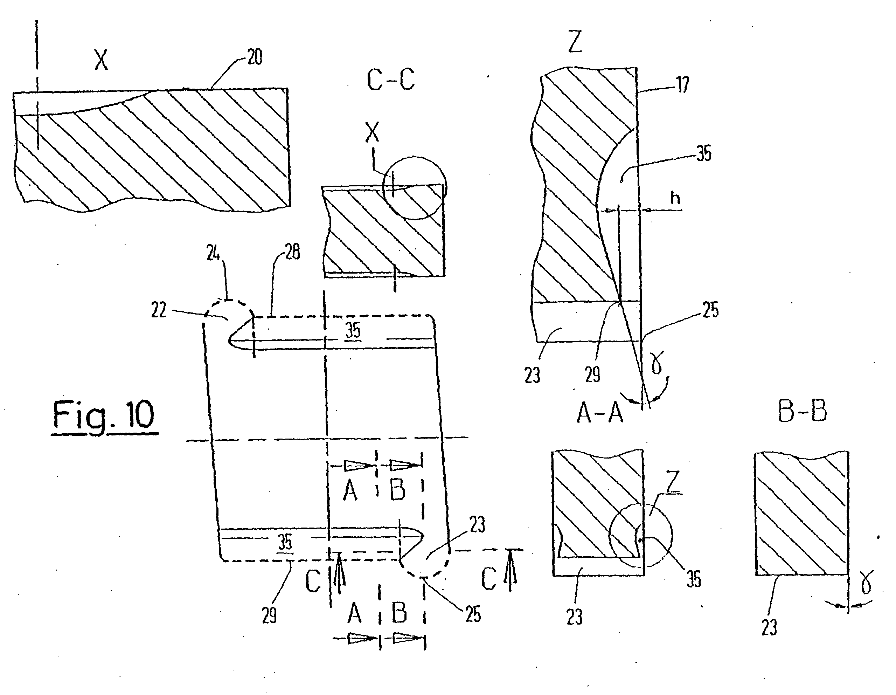

Bei der Ausführungsform gemäß Fig. 10 sind die Durchmesserschneiden 28,29 positiv, die Einstichschneiden 24,25 bzw. 26,27 hingegen negativ. Die muldenartigen Spanformstufen 35 der Durchmesserschneiden 28,29 stehen geradlinig auslaufend in den Bereich der Trägervorsprünge 22,23 der Einstichschneiden 24,25 bzw. 26,27 hinein. Die unterschiedlichen Geometrien von Einstichschneiden und der Durchmesserschneiden sind durch die Teilschnitte A-A und B-B mit der Vergrößerung von A-A in der Detaildarstellung Z am Beispiel einer Durchmesserschneide 29 und der zugeordneten Einstichschneide 25 exemplarisch verdeutlicht. Dieses Ausführungsbeispiel zeigt anhand der Durchmesserschneide 29, daß die Durchmesserschneiden gegenüber den Einstichschneiden in Richtung des Hauptschnittdruckes abgestuft bzw. heruntergesetzt sind und zwar um das Maß h. Die Schneidengeometrie im Bereich der Trägervorsprünge 22,23 ist exemplarisch anhand des Teilschnittes C-C mit der Vergrößerung X verdeutlicht.

Die Ausführungsform gemäß Fig 10 ist besonders geeignet für langspanende Werkstoffe, weil der Spanbruch begünstigt ist. Auch eignet sich diese Schneidengeometrie zur Schnitt- und Passivkraftreduzierung. Es ist eine effektive Wirkgeometrie durch die positiven Spanwinkel an den Durchmesserschneiden 28,29 und durch die negativen, die Schneide stabilisierende Spanwinkel an den Einstichschneiden 24,25 bzw. 26,27 erzielt.

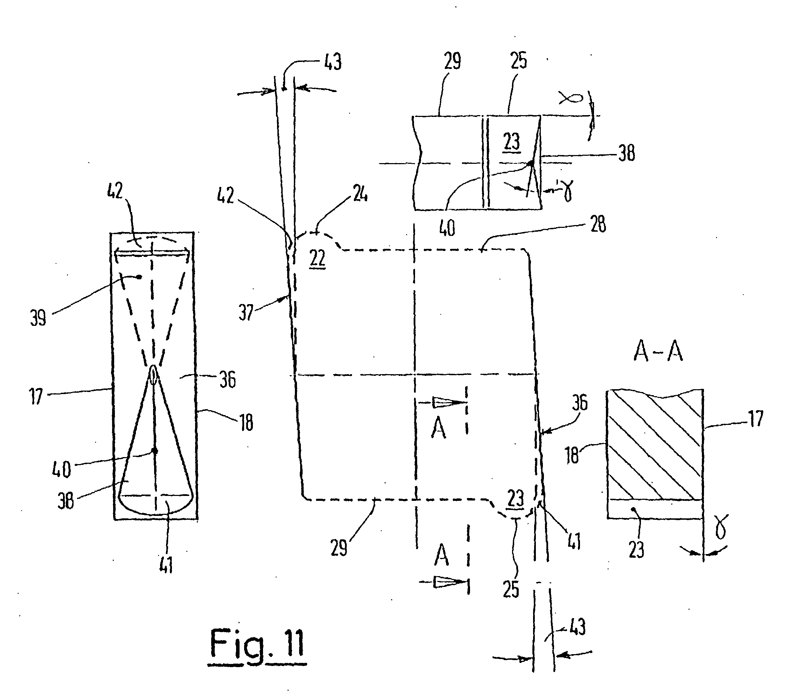

Bei der Wendeschneidplatte nach Fig. 11 sind die Trägervorsprünge 22,23 der Einstichschneiden 24,25 bzw. 26,27 an ihren Außenflanken 36,37 zur Freiflächenbildung ausgemuldet. Die Ausmuldungen 38,39 sind v-förmig gestaltet mit etwa in der Mittelebene der Schneidplatte 9 liegendem V-Scheitel 40. Die Tiefe der Ausmuldungen 38,39 nimmt von den Trägervorsprüngen 22,23 her in Richtung auf die Schneidplattenmitte hin stetig ab.

Die Ausmuldungen 38,39 erstrecken sich bis zur Mitte der Außenseite der Schneidplatte 9. Auch in Draufsicht auf die Außenflanken 36,37 weisen die Ausmuldungen 38,39 eine sich zu den Trägervorsprüngen 22,23 hin öffnende V-Form auf (Fig. 11). Die Ausmuldungen 38,39 in den Freiflächen unterhalb der Außenseiten der Einstichschneiden 24,25 bzw. 26,27 sind dazu bestimmt, bei flacheren axialen Neigungswinkeln der Schneidplatte 9 für einen ausreichend großen Freiwinkel α zu sorgen. Der kommt dann zum Einsatz bzw. wird benötigt, wenn am Übergang von der Einstichschneide 24,25 bzw. 26,27 zur Durchmesserschneide 28,29 ein durch einen Übergangswinkel bedingt unzureichend kleiner Freiwinkel einen flacheren, axialen Neigungswinkel erfordert. Durch die Ausmuldungen 38,39 ist eine effektive Wirkgeometrie mit negativen Spanwinkeln an den Durchmesserschneiden 28, 29 und an den Einstichschneiden 24-27 gewährleistet.

Weitere Ausmuldungen 41,42 mit ähnlicher V-Form erstrecken sich unter einem Winkel 43 jeweils zur vorherigen Ausmuldung in den Bereich der Freiflächen der Einstichschneiden 24,25 bzw. 26,27 hinein.

## Patentansprüche

1. Scheibenfräser (1) zum Fräsen eines Kurbelwellenzapfens (2) einschließlich beider diesem zugeordneten Ölbundwangen (3,4) sowie zwischen diesen vorgesehenen, als Ölnuten dienenden Freistichen (5,6), mit auf seinem Fräserumfang (7) in Umfangsrichtung (8) auf seiner linken und auf seiner rechten Seite angeordneten plattenförmigen Schneideinsätzen (9),
**dadurch gekennzeichnet,**
**dass** jeder der Schneideinsätze (9) mit dessen die Spanflächen (17,18) enthaltenden Deckfläche (10) bezogen auf die Fräserachse im wesentlichen radial ausgerichtet ist und sowohl jeweils eine Hälfte des Kurbelzapfens (2) mit deren benachbarter Ölbundwange (3, 4) als auch den Freistich (5, 6) formt, wobei diese Schneideinsätze (9) auf jeder Fräserseite um eine Teilung (12) zueinander beabstandet und auf den beiden Fräserseiten um eine halbe Teilung (14) gegeneinander versetzt auf dem Fräserumfang (7) angeordnet sind.

2. Scheibenfräser nach Anspruch 1,
**dadurch gekennzeichnet,**
**dass** jeder Schneideinsatz (9) eine Wendeplatte mit mindestens zwei auf derselben Fräserseite nacheinander in Schneidstellung bringbaren Schneiden (15,16) ist, und dass jeder Schneideinsatz (9) derart formgestaltet ist, dass dieser am sowohl auf der linken als auch auf der rechten Fräserseite einsetzbar ist.

3. Wendeschneidplatte für einen Scheibenfräser nach Anspruch 1 oder 2, in Form etwa eines Quaders mit rhombusförmigen oder rhomboiden, die Spanflächen (17,18) enthaltenden Deckflächen (10) mit einander diagonal gegenüberliegenden Trägervorsprüngen (22,23) mit jeweils einer Einstichschneide (24,25) für den Freistich (5, 6),
- wobei die Trägervorsprünge (22,23) jeweils eine Verlängerung einander gegenüberliegender und jeweils eine Schneidkante (20,21) bildender Deckflächenseiten sind,
- wobei sich beide Trägervorsprünge (22,23) über einen Teil der derselben Deckfläche (10) zugeordneten anderen Schneiden (15,16) erstrecken, die jeweils eine Durchmesserschneide (28,29) bilden, **dadurch gekennzeichnet daß** zwei Trägervorsprünge vorgesehen sind und daß die Trägervorsprünge (22,23) der Einstichschneiden (24,25; 26,27) an ihren Außenflanken (36,37) zur Bildung von Freiflächen mit positivem Freiwinkel ausgemuldet sind.

4. Wendeschneidplatte nach Anspruch 3,
**gekennzeichnet durch**
eine im Querschnitt v-förmige Ausmuldung (38,39) mit in etwa der Mittelebene der Schneidplatte (9) liegendem V-Scheitel (40).

5. Wendeschneidplatte nach Anspruch 3 oder 4,
**dadurch gekennzeichnet,**
**daß** die Tiefe der Ausmuldungen (38,39) in Richtung auf die Schneidplattenmitte stetig abnimmt.

6. Wendeschneidplatte nach einem der Ansprüche 3 bis 5,
**dadurch gekennzeichnet,**
**daß** die Ausmuldungen (38,39) sich bis zur Mitte der sie tragenden Außenflanke (36,37) einer Schneidplatte (9) erstrecken.

7. Wendeschneidplatte nach einem der Ansprüche 3 bis 6,
**gekennzeichnet durch**
eine sich in Draufsicht auf die Schneidplattenflanken (36,37) zum Trägervorsprung (22,23) der Einstichschneiden (24,25; 26,27) hin öffnende V-Form der Ausmuldungen (38,39).

8. Wendeschneidplatte nach einem der Ansprüche 3 bis 7,
**gekennzeichnet durch**
wenigstens eine weitere Ausmuldung (41,42), die sich unter einem Winkel (43) gegenüber der jeweils dahinterliegenden Ausmuldung (38,39) unter den Trägervorsprung (22,23) erstreckt und in dessen Freifläche ausläuft.

9. Wendeschneidplatte nach einem der Ansprüche 3 bis 8,
**gekennzeichnet durch**
einen rechten Winkel mit den Deckflächen (10) bzw. mit den Spanflächen (17,18) bildende Freiflächen (32) der Schneideinsätze (9).

10. Wendeschneidplatte nach einem der Ansprüche 3 bis 9,
**dadurch gekennzeichnet,**
**daß** der Trägervorsprung (22,23) mit der Einstichschneide (24,25) gegenüber der angrenzenden Durchmesserschneide (28,29) abgestuft ist.

11. Wendeschneidplatte nach einem der Ansprüche 3 bis 10,
**dadurch gekennzeichnet,**
**daß** die Durchmesserschneiden (28,29) und/oder die Einstichschneiden (24,25) zur Bildung von positiven Schneiden mit einer Spanformstufe (33,35) versehen sind.

12. Wendeschneidplatte nach einem der Ansprüche 3 bis 11,
**gekennzeichnet durch**
eine muldenartige Querschnittsform der Spanformstufe (33,35).

13. Wendeschneidplatte nach Anspruch 12,
**dadurch gekennzeichnet,**
**daß** die muldenartigen Spanformstufen (35) der Durchmesserschneiden (28,29) in den Bereich der Trägervorsprünge (22,23) der Einstichschneiden (24,25; 26,27) hineinstehen.

14. Wendeschneidplatte nach Anspruch 13,
**dadurch gekennzeichnet,**
**daß** die Durchmesserschneiden (28,29) in Richtung des Hauptschnittdruckes tiefer liegen als die Einstichschneiden (24,25; 26,27).

15. Wendeschneidplatte nach einem der Ansprüche 3 bis 14,
**dadurch gekennzeichnet,**
**daß** die Durchmesserschneiden (28,29) positiv und die Einstichschneiden (24,25 ) negativ sind.

## Claims

1. Disc milling cutter (1) for milling a crankshaft pin (2) including both oil collar cheeks (3,4) assigned to the latter and undercuts (5, 6) provided between these oil collar cheeks (3, 4) and serving as oil grooves, having plate-shaped cutting inserts (9) arranged on its cutter circumference (7) in the circumferential direction (8) on its left-hand side and on its right-hand side, **characterized in that** each of the cutting inserts (9), with its top surface (10) containing the rake faces (17, 18), is oriented substantially radially with regard to the cutter axis and forms in each case one half of the crankpin (2) with its adjacent oil collar cheek (3, 4) as well as the undercut (5, 6), said cutting inserts (9), on each cutter side, being at a distance from one another by a pitch (12) and, on both cutter sides, being arranged on the cutter circumference (7) so as to be offset from one another by half a pitch (14).

2. Disc milling cutter according to Claim 1,
**characterized in that** each cutting insert (9) is a reversible tip having at least two cutting edges (15, 16) which can be brought into cutting engagement one after the other on the same cutter side, and **in that** each cutting insert (9) is designed in such a way that it can be used on both the left-hand side and the right-hand side of the cutter.

3. Reversible cutting tip for a disc milling cutter according to Claim 1 or 2, approximately in the form of a parallelepiped with rhombus-shaped or rhomboidal top surfaces (10) containing the rake faces (17, 18) and having diagonally opposite carrier projections (22, 23) with a recessing cutting edge (24, 25) in each case for the undercut (5, 6),
- the carrier projections (22, 23) each being an extension of top-surface sides located opposite one another and in each case forming a cutting edge (20, 21),
- both carrier projections (22, 23) extending over part of the other cutting edges (15, 16) which are assigned to the same top surface (10) and in each case form a diameter cutting edge (28, 29),
**characterized in that** two carrier projections are provided, and **in that** the carrier projections (22, 23) of the recessing cutting edges (24, 25; 26, 27) have a depression on their outer flanks (36, 37) for forming flanks with a positive clearance angle.

4. Reversible cutting tip according to Claim 3,
**characterized by** a depression (38, 39) which is V-shaped in cross section and has a V-apex (40) lying approximately in the centre plane of the cutting tip (9).

5. Reversible cutting tip according to Claim 3 or 4,
**characterized in that** the depth of the depressions (38, 39) decreases continuously in the direction of the cutting-tip centre.

6. Reversible cutting tip according to one of Claims 3 to 5, **characterized in that** the depressions (38, 39) extend up to the centre of that outer flank (36, 37) of a cutting tip (9) which bears them.

7. Reversible cutting tip according to one of Claims 3 to 6, **characterized by** a V-shape of the depressions (38, 39) which, in plan view of the cutting-tip flanks (36, 37), opens towards the carrier projection (22, 23) of the recessing cutting edges (24, 25; 26, 27).

8. Reversible cutting tip according to one of Claims 3 to 7, **characterized by** at least one further depression (41, 42) which extends at an angle (43) to the depression (38, 39) lying behind it in each case under the carrier projection (22, 23) and runs out into the flank of the latter.

9. Reversible cutting tip according to one of Claims 3 to 8, **characterized by** flanks (32) of the cutting inserts (9), these flanks (32) forming a right angle with the top surfaces (10) or with the rake faces (17, 18).

10. Reversible cutting tip according to one of Claims 3 to 9, **characterized in that** the carrier projection (22, 23) having the recessing cutting edge (24, 25) is stepped relative to the adjoining diameter cutting edge (28, 29).

11. Reversible cutting tip according to one of Claims 3 to 10, **characterized in that** the diameter cutting edges (28, 29) and/or the recessing cutting edges (24, 25) are provided with a chip breaker groove (33, 35) for forming positive cutting edges.

12. Reversible cutting tip according to one of Claims 3 to 11, **characterized by** a trough-like cross-sectional shape of the chip breaker groove (33, 35).

13. Reversible cutting tip according to Claim 12,
**characterized in that** the trough-like chip breaker grooves (35) of the diameter cutting edges (28, 29) extend into the region of the carrier projections (22, 23) of the recessing cutting edges (24, 25; 26, 27).

14. Reversible cutting tip according to Claim 13,
**characterized in that** the diameter cutting edges (28, 29) are deeper in the direction of the main cutting pressure than the recessing cutting edges (24, 25; 26, 27).

15. Reversible cutting tip according to one of Claims 3 to 14, **characterized in that** the diameter cutting edges (28, 29) are positive and the recessing cutting edges (24, 25) are negative.

## Revendications

1. Fraise (1) à disque pour le fraisage d'un tourillon (2) de vilebrequin, y compris les deux joues à collerette d'huile (3, 4) associées à celui-ci, ainsi que des dépouilles (5, 6) servant de rainures à huile et agencées entre lesdites joues, comportant des inserts de coupe (9) en forme de plaquettes agencées sur sa périphérie de fraisage (7) sur son côté gauche et sur son côté droit en direction périphérique (8), **caractérisée en ce que** chacun des inserts de coupe (9) est orienté, avec sa surface de couverture (10) comprenant les surfaces de coupe (17, 18), sensiblement radialement par rapport à l'axe de la fraise et forme à la fois une moitié respective du tourillon de vilebrequin (2) avec sa joue à collerette d'huile (3, 4) voisine et la dépouille (5, 6), ces inserts de coupe (9) étant distants l'un de l'autre d'un pas (12) sur chaque côté de la fraise et étant agencés sur la périphérie de fraisage (7) en décalage d'un demi-pas (14) l'un par rapport à l'autre sur les deux côtés de la fraise.

2. Fraise à disque selon la revendication 1, **caractérisée en ce que** chaque insert de coupe (9) est une plaquette réversible comportant au moins deux tranchants (15, 16) susceptibles d'être amenés en position de coupe l'un après l'autre sur le même côté de la fraise, et **en ce que** chaque insert de coupe (9) est conformé de telle sorte que celui-ci est utilisable aussi bien sur le côté gauche que sur le côté droit de la fraise.

3. Plaquette de coupe réversible pour une fraise à disque selon l'une ou l'autre des revendications 1 et 2, sous forme approximativement d'un parallélépipède comportant des surfaces de couverture en forme de losange ou en forme rhomboïdale et comprenant les surfaces de coupe (17, 18), présentant des saillies porteuses (22, 23) diagonalement opposées avec un tranchant de dépouille respectif (24, 25) pour la dépouille (5, 6),
- dans laquelle les saillies porteuses (22, 23) sont chacune un prolongement des côtés de surface de couverture mutuellement opposés et formant chacun une arête de coupe (20, 21),
- dans laquelle les deux saillies porteuses (22, 23) s'étendent sur une partie des autres tranchants (15, 16) associés à la même surface de couverture (10), qui forment chacun un tranchant diamétral (28, 29), **caractérisée en ce qu'**il est prévu deux saillies porteuses, et **en ce que** les saillies porteuses (22, 23) des tranchants de dépouille (24, 25 ; 26, 27) sont pourvues d'un creux sur leurs flancs extérieurs (36, 37) pour former des surfaces de dépouille avec un angle de dépouille positif.

4. Plaquette de coupe réversible selon la revendication 3, **caractérisée par** un creux (38, 39) de section en forme de V dont le sommet du V (40) est situé approximativement dans le plan central de la plaquette de coupe (9).

5. Plaquette de coupe réversible selon l'une ou l'autre des revendications 3 et 4, **caractérisée en ce que** la profondeur des creux (38, 39) diminue constamment en direction du centre de la plaquette de coupe.

6. Plaquette de coupe réversible selon l'une quelconque des revendications 3 à 5, **caractérisée en ce que** les creux (38, 39) s'étendent jusqu'au centre du flanc extérieur (36, 37) d'une plaquette de coupe (9), qui les porte.

7. Plaquette de coupe réversible selon l'une quelconque des revendications 3 à 6, **caractérisée par** une forme en V des creux (38, 39) qui s'ouvre, en vue de dessus sur les flancs (36, 37) de la plaquette de coupe, vers la saillie porteuse (22, 23) des tranchants de dépouille (24, 25 ; 26, 27).

8. Plaquette de coupe réversible selon l'une quelconque des revendications 3 à 7, **caractérisée par** au moins un autre creux (41, 42) qui s'étend sous un angle (43) par rapport au creux suivant respectif (38, 39) au-dessous de la saillie porteuse (22, 23) et qui se termine dans sa surface de dépouille.

9. Plaquette de coupe réversible selon l'une quelconque des revendications 3 à 8, **caractérisée en ce que** les surfaces de dépouille (32) des inserts de coupe (9) forment un angle droit avec les surfaces de couverture (10) ou avec les surfaces de coupe (17, 18).

10. Plaquette de coupe réversible selon l'une quelconque des revendications 3 à 9, **caractérisée en ce que** la saillie porteuse (22, 23) comportant le tranchant de dépouille (24, 25) est réalisée en gradin par rapport au tranchant diamétral adjacent.

11. Plaquette de coupe réversible selon l'une quelconque des revendications 3 à 10, **caractérisée en ce que** les tranchants diamétraux (28, 29) et/ou les tranchants de dépouille (24, 25) sont pourvus d'un gradin de formage de copeaux (33, 35) pour former des tranchants positifs.

12. Plaquette de coupe réversible selon l'une quelconque des revendications 3 à 11, **caractérisée en ce que** le gradin de formage de copeaux (33, 35) présente en section transversale une forme en creux.

13. Plaquette de coupe réversible selon la revendication 12, **caractérisée en ce que** les gradins de formage de copeaux (35) en forme de creux des tranchants diamétraux (28, 29) pénètrent dans la zone des saillies porteuses (22, 23) des tranchants de dépouille (24, 25 ; 26, 27).

14. Plaquette de coupe réversible selon la revendication 13, **caractérisée en ce que** les tranchants diamétraux (28, 29) se situent plus profondément en direction de la pression de coupe principale que les tranchants de dépouille (24, 25 ; 26, 27).

15. Plaquette de coupe réversible selon l'une quelconque des revendications 3 à 14, **caractérisée en ce que** les tranchants diamétraux (28, 29) sont positifs et les tranchants de dépouille (24, 25) sont négatifs.
